# EUROPEAN PATENT SPECIFICATION

(11) **EP 3 520 871 B1**
(45) Date of publication and mention of the grant of the patent: **24.11.2021**
(21) Application number: 18154433.9
(22) Date of filing: 31.01.2018
(51) Int. Cl.: B01D 35/147, B01D 35/153, B01D 35/16, B01D 29/21

(54) **FILTER CARTRIDGE AND FILTER HOLDER FOR THE FILTER CARTRIDGE**
FILTERKARTUSCHE UND FILTERHALTER FÜR DIE FILTERKARTUSCHE
CARTOUCHE DE FILTRE ET PORTE-FILTRE POUR LA CARTOUCHE DE FILTRE

(43) Date of publication of application: 07.08.2019
(73) Proprietor: Hengst SE, 48147 Münster (DE)
(72) Inventor: ARDES, Wilhelm, 59387 Ascheberg (DE)
(74) Representative: Lohr, Jöstingmeier & Partner

(56) References cited:
- WO-A1-2016/169754
- DE-A1- 10 248 907
- DE-A1- 19 848 978
- FR-A1- 2 845 929

## Description

### Field of the invention

The invention relates to filter holder, in particular to a bypass valve holder for a fluid filter system, to a corresponding filter cartridge, a filter housing cover, the filter housing and to systems comprising at least two of the identified components.

### Description of the related art

Oil filters are crucial elements in operating combustion engines and have to be replaced regularly to ensure reliable operation of the combustion engine. The oil filter systems typically comprise a replaceable oil filter cartridge (herein briefly 'filter cartridge' or simply 'cartridge') and a housing for the cartridge. The housing positions the cartridge in between of an oil inlet and an oil outlet, to enable an oil flow through the filter element of the cartridge. The cartridge typically comprises a filter element with a tubular shape. The tubular filter element is disposed between two end caps. In operation, the oil flows from the oil inlet into the housing accommodating the cartridge and then radially inwards through the filter element, whereby suspended contaminants are separated (to a large extend) from the oil and remain in the filter element. The oil pouring through the filter element is withdrawn from the hollow space being enclosed by the tubular filter element through an oil conduit being provided by at least one of the end caps, said end cap being referred to as front end cap. The oil conduit is in fluid communication with the outlet. Different embodiments of this kind of filter cartridges are disclosed, e.g. in WO 2015112458 and US 2016038859 A1.

WO 2016/169754 A1 addresses removing a filter cartridge from a filter housing using a filter removal tool. The filter removal tool is inserted from the rear side into the filter cartridge and engaged behind a front-end cap by a rotation of the tool, thereby enabling to remove the filter by simply pulling the removal tool out of the filter housing.

DE19848978A1 discloses an oil filter cartridge being attached to a filter housing cover by a filter holder. The filter holder has tongues with radial protrusions engaging behind a rim of a front-end cap of the oil filter cartridge. The front-end cap's face facing the filter holder is essentially plane.

US 2016/0001206 discloses a similar filter cartridge. The filter cartridge is directly mounted with its front end cap to a housing cap. Accordingly, the front end cap has mounting means for connecting the filter cartridge with the housing top.

DE10248907 describes a disk shaped adapter for connecting the filter element to the cap, the adapter comprising a bypass valve. The disadvantage of this and similar solutions is that the adapter has too much freedom of movement which makes it difficult in some circumstances to remove the snap-fitted filter element due to a lack of leverage.

### Summary of the invention

The problem to be solved by the invention is to provide an enhanced oil filter system providing reduced manufacturing costs and that provides less waist material when disposed after use.

The problem to be solved is further the provision of means that allow easier removal of the spent filter cartridge from the filter, in particular the filter cap.

Solutions of the problem are described in the independent claims. The dependent claims relate to further improvements of the invention.

The invention enables to removably attach a filter cartridge, e.g. an oil filter cartridge, to a filter holder of a filter system. The filter holder may be attached to or be integrally formed with a housing cover. The invention enables a safe filter cartridge handling, even when replacing still hot used cartridges. In addition, the material being disposed when replacing a filter cartridge is reduced, thereby lowering production costs and as well reducing waste. As will be described in more detail below, the filter holder may e.g. be a bypass valve holder configured to support a filter cartridge.

The filter holder according to an aspect of the invention enables to safely mount and unmount a corresponding filter cartridge. The filter holder may be part of a bypass valve for the corresponding fluid filter system. In his case the filter holder may as well be a valve holder. The valve holder may have a fluid inlet defining a longitudinal axis of the filter holder and a front side of the filter holder (and thus as well of the bypass valve). At the rear side of the valve holder is a valve seat. As usual the rear side is the side of the valve holder, facing away from the front side. Of course the terms front and rear could be swapped without changing the technical teaching of this application. The filter holder may comprise a disc having the front side with the fluid inlet the rear side with the valve seat. If the bypass valve is omitted, we refer to the front side of the filter holder and thus as well of the disc as the side which is configured to face away from the filter cartridge (when the filter is assembled); accordingly the rear side faces towards the filter cartridge, after assembly. The longitudinal axis is accordingly defined, i.e. to essentially match the filter cartridge's axis.

Support means may be attached to the filter holder. The support means may provide a spring abutment for a valve spring. The valve spring preloads the valve member against the valve seat. Thus as usual, the valve member is movably supported, enabling to move it from a first position, in which it blocks, i.e. closes the valve seat (i.e. the opening being defined by the valve seat), to a second position and back to the first position. In the second position the valve seat is at least partially opened, enabling a fluid to pass the bypass valve.

At least one tongue extends from the rear side of the filter holder. The at least one tongue has at least one protrusion, being configured to engage into a space behind a rim. Said protrusion faces radially outwards (radially, as usual is relative to the longitudinal axis) and is thus configured to engage into a space that is radially outwards from the tongue. This at least one tongue enables to removably fasten the filter holder to a rim, e.g. to a rim being defined by a through hole in an end cap of a filter cartridge. As will be explained in more detail below, the rim preferably faces radially inwards. As apparent, the valve holder may comprise more than a single one of said tongues, preferably at least two or three tongues. The tongues and/or the rim are preferably elastic, enabling to mechanically connect the valve holder to the filter cartridge by simply snapping the protrusions over the rim (snap-in connection). Disconnecting can be obtained by slightly bending the tongues radially inwardly, thereby enabling the corresponding protrusions to slide over the rim (snap-out disconnection).

The filter holder comprises at least one bearing surface facing away from the rear side of the valve holder, i.e. towards the filter cartridge (if mounted). The bearing surface enables to move, e.g. to pivot the filter holder relative to the filter cartridge (and vice versa). In a preferred example the bearing surface may provide a sealing surface.

In this case the bearing surface faces away from the rear side of the valve holder, wherein the bearing surface preferably surrounds the valve seat at a first radial distance *R*₁ from the axis. The bearing surface may provide or comprise a sealing surface. In this case the filter holder can be attached sealingly to an end cap of a filter cartridge, i.e. there is essentially no fluid bypassing the optional bypass valve in case it is closed. Thus, the fluid is reliably filtered under normal operating conditions.

In a preferred embodiment the bearing surface/sealing surface is integrally formed by the filter holder, thereby reducing the risk of mistakes when installing a filter cartridge. In addition manufacturing costs can be reduced. Alternatively, the sealing surface could be provided by a gasket, being positioned between the filter holder and the filter cartridge. But even if the sealing if provided by a separate gasket, the surface of the filter holder contacting the gasket forms a sealing surface.

An abutment is positioned on the rear surface at a second radial distance *R*₂ from said axis. The abutment enables to release the tongues and thus a filter cartridge by simply pivoting the rear end of the filter cartridge relative to the axis. For example, if a filter cartridge is connected to the filter holder, which itself may be mounted to a housing cover, one may release the filter cartridge after removing the housing cover from its corresponding socket by providing a radial load on the free end of the cartridge. In a first step, the filter cartridge may pivot, preferably around a point of the filter holder's axis until the abutment contacts the filter cartridge. Now the abutment defines the pivoting point and the lever arm, thus, the tongues can be retracted from the rim by slightly enhancing the radial load. Thus, the (clean) housing cover can be used to grip a hot oil soaked filter cartridge without touching it. The filter cartridge can be moved to a dust bin and is released into the dust bin by slightly pressing the free end of the filter cartridge against the dust bin's wall using the housing cover or the filter holder as griping tool.

The second radial distance *R*₂ is greater or equal the first radial distance *R*₁, i.e. *R*₂ ≥ *R*₁. By selecting the distances as indicated, the lever arm for releasing the rim is adjusted to provide a particular simple a handling of the filter cartridge when using the filter holder as a gripping tool.

If the sealing surface is inclined to face away from the axis and the rear side, the filter holder may flex and still provide a tight connection. Thus, the sealing surface may be preloaded by flexing (i.e. elastically deforming) the filter holder when connecting it to the rim, thereby enabling a particularly tight connection between the corresponding end cap and the filter holder.

The bearing surface has the shape of a section of a sphere having its center on the axis. This enables an attached filter cartridge to pivot relative to the filter holder without damaging the sealing surface. Longevity of the filter holder is thereby enhanced.

Preferably, the abutment limits the pivoting angle to an angle *β*, to thereby ensure that filter cartridge abuts the abutment and not a side wall of a filter housing cover, when pivoted.

Preferably, the bearing surface and the abutment are each provided by a ring being attached to the rear surface of the filter holder or are provided by a single ring being attached to said rear surface, to thereby enhance the possibility of flexing the filter holder against the end cap to enhance the force pressing the bearing surface against the end cap.

The filter cartridge is configured for filtering a fluid, e.g. engine oil, and to mate with a filter holder, preferably with the filter holder descibed above. The filter cartridge comprises at least a filter element with a fluid channel defining a longitudinal axis. Herein we assume, that when properly attached to each other the filter cartridge's longitudinal axis and the filter holder's longitudinal axis match, but this is not necessary, however a preferred embodiment, as it eases rotation of the filter holder relative to the filter cartridge (where to two axes remain aligned). When pivoting the filter cartridge, as suggested above, the axes are as a matter of fact misaligned.

The invention is as well realized by the corresponding filter cartridge or more precisely by its front end cap. The front end cap has a front side and a rear side. The rear side is sealingly attached to the front side of the filter element. The front end cap is configured to be releasably attached to a cover of a filter housing, e.g. via said filter holder. The front end cap may have a bypass opening for enabling a bypass fluid flow. The bypass opening protects the filter from collapsing in case the pressure drop through the filter element is too high (e.g. due to an enhanced viscosity of the fluid or clogging of the filter medium). In this case a pressure relief valve may open said optional bypass opening (e.g. at least a portion of the opening) enabling at least a portion of the fluid flow to bypass the filter element without damaging the filter element.

The filter cartridge provides a space for receiving at least one protrusion of a tongue being inserted from the front side through the bypass opening, the filter holder may be attached to the front end cap, by simply inserting its tongues with their protrusions into the opening until the tongues flex back outwards and the protrusions engage behind the rim.

The front cap's front side has at least one bearing surface configured to mate with a corresponding bearing surface of a filter holder. In a preferred example, the bearing surface is a sealing surface. The bearing surface, in particular if it is a sealing surface may surround the rim and defines a first radial distance *r*₁ between the sealing surface and the axis. The bearing/sealing surface of the front end cap is configured to mate with a corresponding sealing surface of a filter holder, as explained above. For example, the diameters of the two sealing surfaces could essentially match, e.g. at least overlap.

Similarly, the front surface of the front end cap supports(and/or comprises) an abutment being positioned on the front surface at a second radial distance *r*₂ from said axis, enabling to release the front cap and thus the filter cartridge by simply pivoting the front end cap relative to the filter holder. The abutment is configured to abut its corresponding counterpart of the filter holder, i.e. the filter holder's abutment.

If the rim is provided by a protrusion protruding obliquely out of the front surface thereby defining a recess providing said space for receiving the tongue's protrusion a safe and releasable snap in connection between is provided. In particular, the rim section of the front end cap is reinforced without requiring additional material.

A explained above, the second radial distance *r*₂ is greater or equal to the corresponding first radial distance *r*₁, i.e. *r*₂ ≥ *r*₁, to thereby define reasonable lever arms and to protect the bearing surfaces from being potentially damaged.

If the bearing surface is inclined towards the longitudinal axis, the inclination eases connecting the filter cartridge to a filter holder. If the bearing surfaces are configured as sealing surfaces, sealing is enhanced as well, in particular if the filter holder and/or the front end cap are bent e.g. to enhance a sealing force, i.e. the force with which sealing surfaces are pressed together.

The bearing and preferably as well the sealing surface of the end cap is a section of a sphere having its center on the filter element's axis, to thereby provide a spherical bearing surface enabling to pivot the front end cap relative to the filter holder until at least one of the abutments abuts its respective opposite part without damaging the sealing surface. In addition, one can better sense the pivot angle at which the tongues start to deflect to thereby release the front end cap and thus the filter cartridge, i.e. the risk of potentially overstressing the tongues is reduced.

As well, the bearing surface and the abutment of the front end cap may each be provided by a ring or commonly by a single ring, but different to the filter holder, the ring(s) of the front end cap is(are) preferably attached to the front surface of the front end cap, i.e. the ring(s) extend towards the filter holder(, if the filter holder is mounted to the front end cap).

At least the filter holder can be attached to or integrated in a filter housing cover for a filter system. If the filter holder is configured as a valve holder, the bypass valve is preferably attached to or integrated in a filter housing cover. The filter housing cover as well defines a longitudinal axis, which is preferably at least essentially identical (±10°, preferably less) to the filter holder's longitudinal axis. The filter housing cover has a tubular sidewall section for receiving at least a portion of filter cartridge, e.g. said front end cap. The sidewall section has an open bottom end. The bottom end is preferably configured for being connected to a housing bottom, e.g. by providing a corresponding thread at its open end. The filter housing cover further comprises a cap section closing the upper end of the tubular sidewall section and thus the top of the housing. Herein it is assumed that the filter housing cover's cap section faces upwards, but of course the filter housing could be rotated without changing the technical teaching of the application. In this sense, the term "upwards" could be replaced by "a direction in space".

In a preferred example of the invention, the cap section and the filter holder form a linear bearing enabling a longitudinal displacement of the filter holder and thus of the bypass valve as well as of a filter cartridge being connected to the filter holder. The linear bearing prevents the filter holder to pivot relative to the housing cover's axis. At least said pivoting is limited to an angle *α*, wherein *α* is preferably small, e.g. *α* ≤ 2°, preferably *α* ≤ 1° or even smaller.

This longitudinal displacement enables to control a drain valve, which can e.g. be positioned in a bottom section of a filter housing. In other words, the valve holder is movably supported by (or relative to) the cap section enabling a movement parallel to the longitudinal axis between a retracted and an extended end position. In a preferred embodiment the valve holder is preloaded towards its extended end position to safely close the drain valve if the housing cover is closed.

If the cap section has a recess with a radially inwardly facing surface and the filter holder has a protrusion with a radially outwardly facing surface being in sliding contact with the radially inwardly facing surface of said cap section's recess, wherein the radially inwardly and radially outwardly facing surfaces each have at least one axially symmetric section, a linear bearing is provided that can be manufactured and assembled with ease, i.e. with reduced costs.

Preferably, the radially inwardly surface being in sliding contact with the outwardly facing surface and the radially outwardly facing surface are radially symmetric, thus enabling a filter cartridge being attached to the filter holder to rotate relative to the housing cover. This simplifies mounting of the filter cartridge and of the housing cover to the housing bottom.

Of course, the filter housing cover can be completed to a filter system by a corresponding filter housing bottom with a socket for receiving a conduit of the filter cartridge, as summarized in the introductory portion.

### Description of Drawings

In the following the invention will be described by way of example, without limitation of the general inventive concept, on examples of embodiment with reference to the drawings.
- Figure 1: shows a fluid filtering system with a filter cartridge being attached to a bypass filter holder.
- Figure 2: shows a detail of Fig. 1.
- Figure 3: shows a detail of the filtering system of Fig. 1 similar to Fig. 2, wherein the filter cartridge is pivoted relative to the filter holder.
- Figure 4: shows a further detail similar to Fig. 3.
- Figure 5: shows a detail of a filter system being similar to the filter system as depicted in FIG. 1.

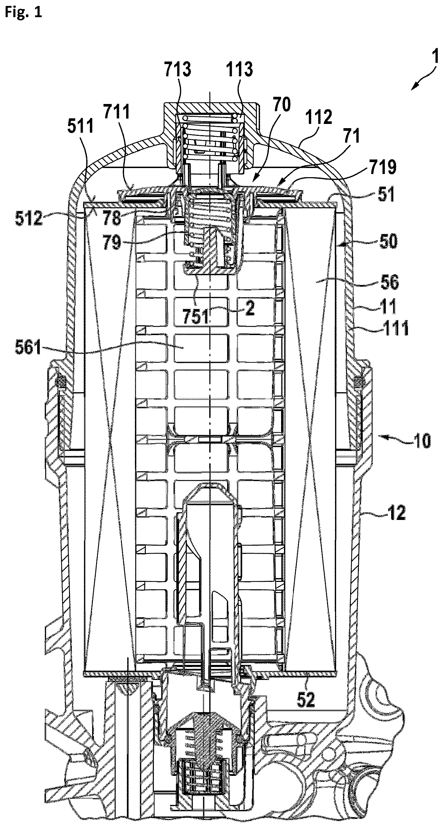

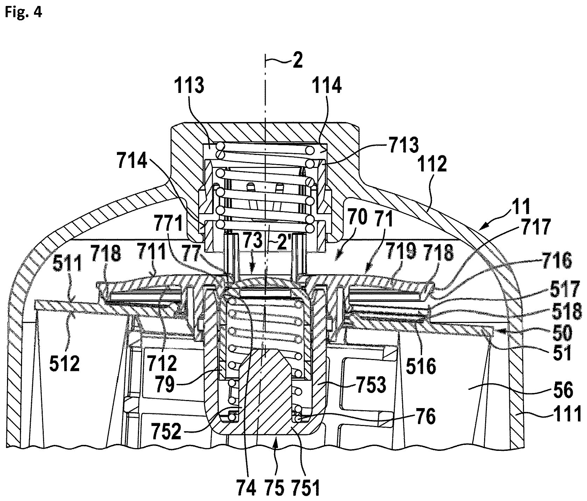

In figure 1 a filter holder 71 and a front end cap 51 according to the invention are shown in their respective positions in an assembled filter system 1. The filter system 1 has a filter housing 10 comprising a housing bottom 12 and a removable housing cover 11. The housing bottom 12 has a socket for receiving a rear end cap 52 of a filter cartridge 50 with a filter element 56 in between of the front end cap 51 and the rear end cap 52. The filter element 56 forms a fluid channel 561 with a longitudinal axis 2' (cf. FIG. 4, in FIG. 1 to FIG.2 axes 2 and 2' are identical) for collecting filtered fluid after having poured radially inward through the filter element 56. On the top of the filter element 56, herein as well referred to as front end of the filter element is the front end cap 51, to inhibit unfiltered fluid to ender the fluid channel 561. However, to protect the filter element 56 from collapsing, e.g. if the filter element is partially blocked or if the viscosity is temporarily to high (as it is often the case for still cold engine oil just after startup of a combustion engine), the filter system has a bypass valve 70, being a pressure relief valve for selectively enabling a fluid flow through a bypass opening of the front end cap 51.

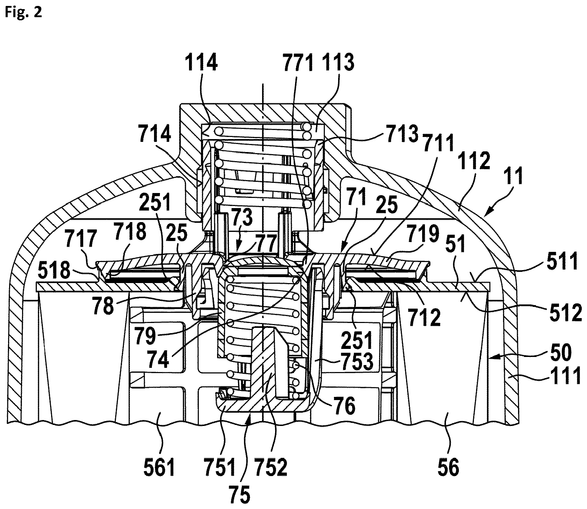

As can be seen best in FIG. 2, the bypass valve 70 is integrated in the filter holder 71, thus being a valve holder 71. In this example the filter holder 71 has a disc portion 719 covering the front end cap 51, to avoid an uncontrolled bypass flow through the bypass opening. The bypass flow is controlled by the bypass valve 70 having a fluid inlet 73 which is simply an open end of a conduit 77 providing a valve seat 74 at its rear side. To ease terminology, herein, we refer to the side or face of the filter holder 71 having the fluid inlet as front side 711 and to its side having the valve seat 74 as rear side 712, but this in an arbitrary definition, being made only to simplify terminology by introducing a reference direction.

A valve member 79 may be spring loaded against the valve seat 74 by a valve spring 76. Once the pressure gradient between the valve inlet 73 and the fluid channel 561, which accommodates the rear portion of the valve member 79 exceeds a threshold being defined by the spring load, the valve member 79 is pushed rearwards and clears the outlet being defined by the valve seat 74, thereby enabling the fluid to bypass the filter element 56.

The valve member 79 may be supported by a valve member support 75 as depicted in Fig. 2. The valve member support 75 is attached to the filter holder 71. To this end, the filter holder 71 may provide an annular cavity being formed in between of the outer wall 771 of the valve conduit 77 and a support ring 78 enclosing the valve conduit 77, as depicted. The support ring 78 provides a radial recess into which a corresponding protrusion of the valve member support 75 engages to thereby provide a form fitting connection absorbing the axial load provided by the valve spring 76.

The valve member support 75 has an abutment plate 751 extending essentially orthogonal (±10°or less) to the axis 2 and supporting the valve spring 76, being held in its axial position by an axially extending pin 752 on the valve seat facing surface of the abutment plate 751. A number of fingers 753 (at least two, preferably three or more) are connected to the abutment plate 751. The valve fingers 753 each have free distal ends that engage into said annular cavity being in between of the outer wall 771 of the valve conduit 77 and a support ring 78. At least a number of these fingers 753 has a recess extending radially outward to engage into the radial recess of the support ring 78. The inwardly facing surfaces essentially provide a linear bearing of the valve member enabling the valve member to be retracted toward the abutment plate 751 in response to the pressure gradient. If the bypass valve opens, the fluid may flow through slits being formed in between adjacent fingers 753.

To ensure the function of the bypass valve 70 a flow of bypass fluid entering the fluid channel 56 the filter holder 71 has a disc portion being preferably sealingly coupled to the front end cap 51. The coupling is removable, thereby enabling a simple replacement of used (and e.g. partially clogged) filter cartridges 50.

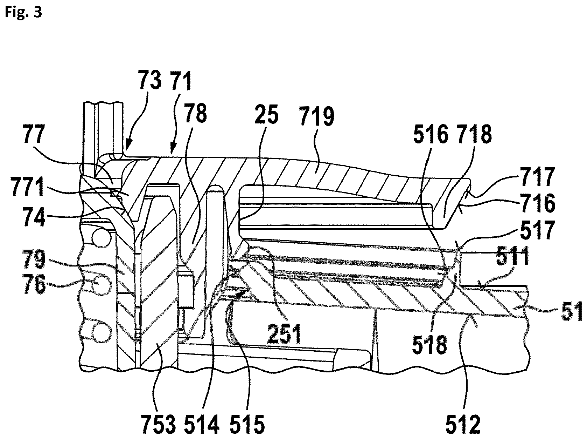

For coupling of the filter holder 71 to the front end cap 51, the front end cap 50 provides a rim (see Fig. 3) enclosing and thus defining the bypass opening (into which the bypass valve 70 is partially inserted). As can be seen in Fig. 3, the rim 514 is provided by a protrusion protruding obliquely out of the front surface 511 of the filter holder's disc portion 719. Thus, the front end cap has a recess 515 extending essentially radially outward for receiving radial protrusions 251 of essentially axially (±30°, preferably ±20° or less, e.g. ±10°) extending tongues 25 thereby defining a recess 515 providing said space for receiving the tongues' protrusions 251. When pushing the valve member 79 against the front end cap 51, the tongues 25 flex inwards until the protrusions 251 engage behind the rim 514 and thereby secure the filter cartridge to the filter holder 71, as depicted in Fig. 1 and FIG. 2.

The filter holder 71 provides a bearing surface, which in this particular example is configured to seal the connection between the filter holder 71 and the front end cap 51. In this example the sealing surface 716 is positioned radially outwards, surrounding the bypass opening. A corresponding bearing and sealing surface 516 is provided on the front side 511 of the front end cap 51, i.e. the radii of the two sealing surfaces are at least essentially identical, i.e. the sealing surfaces contact each other as depicted e.g. in FIG. 2.

In a preferred embodiment, the disk portion is elastically deformed to preload the bearing surfaces 516, 716 against each other, when the tongues 25 engage behind the rim 514. As can be seen in FIG. 3, the bearing surfaces 516, 716 preferably have a spherical shape, i.e. they are ring segments of a sphere. Thereby, the bearing surfaces 516, 716 can slightly slide relative to each other and aligning the filter cartridge 50 relative to the filter holder 71 is not crucial. In other words, the bearing surface 716 of the filter holder 71 is preferably a section of a sphere having its center on the axis 2. Accordingly, the front cap's 51 bearing surface 516 is preferably a section of a sphere having its center on the axis 2 (more precisely axis 2', see FIG. 4), as well. In practice the two centers of the spheres should preferably at least essentially match.

As apparent in particular from FIG. 2 and FIG. 3 the bearing surfaces 516, 716 are surfaces of opposed rings 518, 718, i.e. the ring 518 is on the front side 511 of the front end cap 51 and the ring 718 is on the rear side 712 of the filter holder 71 or more precisely on the rear side 712 of the filter holder's 71 disc portion 719.

To release the engagement of the filter holder 71 with the front end cap 51, the housing cover 11 is removed from the housing bottom 12, thereby enabling access to the free rear end cap 52 of the filter cartridge 50. By applying a radial force against the free rear end of the filter cartridge 50, the front end cap 51 pivots relative to the filter holder 71, until an abutment 717 or/of the filter holder 71 abuts its counterpart, i.e. the abutment 517 on the front side 511 of the front end cap 59. In the preferred example, as shown in FIG. 2 and FIG. 3, the abutments 517, 717 are surfaces of the respective rings 518, 718. When the two abutments 517, 717 contact each other the center of the pivotal movement is shifted from the center of the spheres to the point of contact of the two abutments 517, 717 and it is sufficient to slightly increase the radial force the retract the tongues 25 out of the bypass opening, thereby releasing the filter cartridge as depicted in Fig. 4.

As apparent from FIG. 1 and FIG. 4, the filter housing cover 11 supports the filter holder 71. The filter housing cover 11 comprises a cap section 112 having a receptacle 111 for a bearing pin 713 of the filter holder 71. The receptacle 111 and the bearing pin 713, as well referred to as protrusion 713, provide a linear bearing having essentially no play (preferably smaller 2°, even more preferred to less than 1°) with respect to tilting the angle of the filter holder's axis 2 relative to the housing cover's longitudinal axis 2 (in the figures the ideal situation of no tilt at all is depicted). The linear bearing enables a translation of the filter holder 71 relative to the cap section 112 parallel to the longitudinal axis 2 between a retracted and an extended end position. A spring preloads the filter holder towards the open end of the housing cover and thus towards the housing bottom (when mounted as depicted in Fig. 1).

The cap section 112 has a recess 113, as well referred to as receptacle, with a radially inwardly facing surface 114. Accordingly the protrusion 713 -the bearing pin 713 - with its radially outwardly facing surface714 is in sliding contact with the radially inwardly facing surface 114 of said cap section's recess 113. The radially inwardly and radially outwardly facing surfaces 114, 714 each have at least one axially symmetric section, thereby forming the linear bearing.

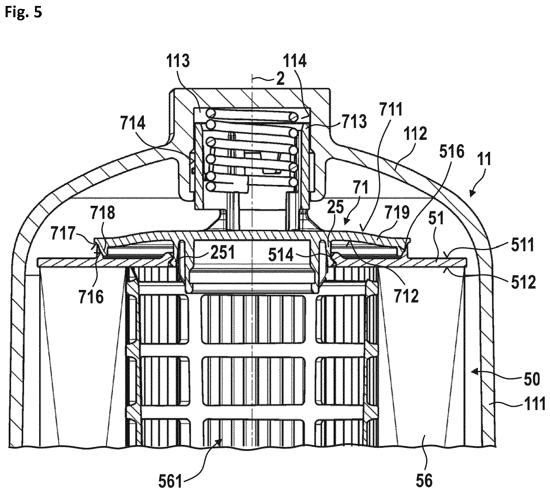

Figure 5 shows a detail of another example filter system. The housing of the filter system can be the same as the housing as depicted in FIG. 1. The main difference between the filter system as depicted in FIG. 1 to FIG. 4 and the system of FIG. 5 is that the bypass valve 70 is not integrated in the filter holder 71. Instead, a bypass valve can be integrated elsewhere, e.g. in the housing, or it can even be omitted, depending on the application. The filter holder 71 of the example in FIG. 5 has a disc portion 719 covering the front end cap 51 of the filter cartridge 50, to avoid an uncontrolled bypass flow through an opening in the front end cap 51. Again, the opening is defined by a rim 514. Thus, the filter cartridge 50 can be the same as in FIG. 1 and accordingly the same reference numerals are used. The filter cartridge 50 can be attached to the filter holder 71 essentially like depicted in Fig. 3, i.e. the rim 514, like in Fig. 3, may be provided by a protrusion protruding obliquely out of the front surface 511 of the filter holder's disc portion 719. Thus, the front end cap 50 has a recess 515 extending essentially radially outward for receiving a radial protrusion 251 of essentially axially (±30°, preferably ±20° or less, e.g. ±10°) extending tongues 25 thereby defining a recess 515 providing a space for receiving the tongues' protrusions 251. When pushing the filter holder 71 against the front end cap 51, the tongues 25 flex inwards until the protrusions 251 engage behind the rim 514 and thereby secure the filter cartridge 50 to the filter holder 71.

Further, like in Fig. 3, the filter holder 71 provides a bearing surface 516, which is configured to seal the connection between the filter holder 71 and the front end cap 51. In this example, the sealing surface 716 is as well positioned radially outwards, surrounding the central opening in the front end cap 51. A corresponding bearing and sealing surface 516 is provided on the front side 511 of the front end cap 51 and again the radii of the two sealing surfaces are at least essentially identical, i.e. the sealing surfaces contact each other as depicted.

The disk portion 719 may be elastically deformed thereby preloading the bearing surfaces 516, 716 against each other, when the tongues 25 engage behind the rim 514. Like in FIG. 3, the bearing surfaces 516, 716 preferably have a spherical shape, i.e. they are ring segments of a sphere. Thus, the bearing surface 716 of the filter holder 71 is preferably a section of a sphere having its center on the axis 2. Accordingly, the front cap's 51 bearing surface 516 is preferably a section of a sphere having its center on the axis 2 (more precisely axis 2', see FIG. 4), as well. In practice the two centers of the spheres should preferably at least essentially match. Mounting the filter cartridge 50 to the filter holder 71 and subsequent unmounting can thus take place as already explained with respect to the example being depicted in FIG. 1 to FIG. 4.

The filter holder 71 of Fig. 5 is attached to the housing in the same way as the filter holder 71 of FIG. 1 to FIG. 4, in this regard the corresponding description can thus as well be read on FIG. 5.

### List of reference numerals

- 1: filter system
- 2: axis
- 2': axis of filter cartridge (see FIG. 4)

- 10: filter housing
- 11: cover
- 111: tubular sidewall section
- 112: cap section
- 113: receptacle/recess
- 114: radially inwardly facing surface,

- 12: bottom

- 25: tongue
- 251: protrusion of tongue

- 50: filter cartridge
- 51: front end cap (upper end cap)
- 511: front surface
- 512: rear surface
- 514: rim
- 515: recess defining a space for a protrusion
- 516: bearing surface being optionally configured as sealing surface
- 517: abutment
- 518: ring on front surface 511
- 52: rear end cap (lower end cap)
- 56: filter element
- 561: fluid channel
- 70: bypass valve
- 71: filter holder, in the FIGs optionally configured as valve holder
- 711: front side of filter holder
- 712: rear side of filter holder
- 713: bearing pin / protrusion
- 714: radially outwardly facing surface of bearing pin 114
- 716: bearing surface of filter holder, being optionally configured as sealing surface
- 717: abutment of filter holder
- 718: ring of filter holder
- 719: disc portion
- 73: fluid inlet / valve inlet
- 74: valve seat
- 75: valve member support
- 751: abutment plate
- 752: centering pin
- 753: finger
- 76: valve spring
- 77: valve conduit connecting the fluid inlet and the valve seat
- 771: wall defining the valve conduit
- 78: support ring
- 79: valve member

## Claims

1. A filter holder (71) for a filter cartridge (50) of one of claims 4 to 7 of a fluid filter system (1), the filter holder (71) being integrated in a filter housing cover (11) or configured for being attached to a filter housing cover (11), wherein the filter holder (71) comprises at least:
a. a rear side (712) configured to mate with the filter cartridge (50), and
b. a front side (711) being opposite to the rear side (712) and configured to mate with the housing cover (11) of the fluid filter system (1), wherein the front side (711) and the rear side (712) define a longitudinal axis (2),
c. at least one tongue (25) extending from the rear side of the filter holder, wherein the tongue (25) has at least one protrusion (251), said protrusion (251) facing radially outwards and being configured to engage into a space behind the rim (514) of the filter cartridge to thereby fasten the filter holder to the rim (514),
d. at least one bearing surface (716) facing away from the rear side (712) of the filter holder (71), wherein the bearing surface (716) is spaced at a first radial distance (*R*₁) from the axis (2),
e. at least one abutment (717) being positioned on the rear side (712) at a second radial distance (*R*₂) from said axis (2), wherein the second radial distance (*R*₂) is greater or equal the first radial distance (*R*₁), i.e. *R*₂ ≥ *R*₁,
**characterized in that**
the bearing surface (716) is a section of a sphere having its center on the axis (2) and configured to enable to pivot the filter holder (71) relative to the filter cartridge (50).

2. The filter holder of claim 1, **characterized in that**
the bearing surface (716) is inclined to face away from the axis (2) and the rear side (712).

3. The filter holder (71) of one of the preceding claims, **characterized in that** the bearing surface (716) and the abutment (717) are each provided by a ring being attached to the front side (711) or are provided by a single ring (718) being attached to the front side (711).

4. A filter cartridge (50) for filtering a fluid, the filter cartridge (50) being configured for being removably attached to a filter holder (71) of one of claims 1 to 3 of a filter system, comprising at least:
a. a filter element (56) forming a fluid channel (561) with a longitudinal axis (2'),
b. a front end cap (51), with a front side (511) and a rear side (512), wherein
(i) the rear side (512) is sealingly attached to the front side of the filter element (56),
(ii) the front end cap (51) is configured to be releasable attached to a cover (11) of a filter housing (10) via said filter holder (71),
(iii) the front end cap (51) has an opening defining a rim (514),
(iv) the filter cartridge provides a space (515) behind the rim (514) for receiving at least one protrusion (251) of a tongue (25) of the filter holder (71), the tongue (25) being inserted from the front side (511) of the front end cap (51) through the opening for removably fasten the filter holder to said rim,
(v) the front side (511) of the front end cap (51) has a bearing surface (516) surrounding the rim (514) and defining a first radial distance (*r*₁) between the bearing surface (516) and the longitudinal axis (2'), wherein the bearing surface (516) is configured to mate with the corresponding bearing surface (716) of the filter holder (71) and
(vi) the front side (511) of the front end cap (51) supports an abutment (517) being positioned on the front side (511) of the front end cap at a second radial distance (*r*₂) from said longitudinal axis (2'), wherein said second radial distance (*r*₂) is greater or equal than said first radial distance (*r*₁)
**characterized in that**
the bearing surface (516) of said front side (511) of the front end cap (51) is a section of a sphere having its center on the longitudinal axis (2'), to thereby provide a spherical bearing surface enabling to pivot the front end cap (51) relative to the filter holder (71) until the abutment (717) of the rear side of the filter holder abuts its respective opposite part, namely the abutment (517) on the front side (511) of the front end cap (51), without damaging the bearing surface (516) of the filter cartridge (50) and **in that** the bearing surface (516) on the front side (511) of the front end cap (51) and the abutment (517) on the front side (511) of the front end cap (51) are configured to release the front end cap (51) of the filter cartridge (50) from the filter holder (71) by pivoting the front end cap (51) with the abutment (517) on the front side (511) of the front end cap (51) relative to the filter holder (71), wherein due to said pivoting the tongue is retracted from the rim (514).

5. The filter cartridge (50) of claim 4, **characterized in that** the rim (514) is provided by a protrusion protruding obliquely out of the front surface (511), thereby defining a recess (515) providing said space for receiving a tongue's protrusion (251).

6. The filter cartridge (50) of one of claims 4 to 5, **characterized in that** the bearing surface (516) is inclined towards the longitudinal axis (2).

7. The filter cartridge (50) of one of claims 4 to 6, **characterized in that** the bearing surface (516) and the abutment (517) are each provided by a ring (518) being attached to the front surface (511) or are provided by a single ring (518) being attached to the front surface (511).

8. A filter housing cover (11) defining a longitudinal axis (2), the filter housing cover (11) having a tubular sidewall section (111) with an open bottom end and a cap section (112) closing the upper end of the tubular sidewall section (111), **characterized in that** the filter holder (71) of one of claims 1 to 3 is attached to the cap section (112).

9. The filter housing cover (11) of claim 8, **characterized in that** the cap section (112) and the filter holder (71) form a linear bearing enabling a translation of the filter holder relative to the cap section (112) parallel to the longitudinal axis (2) between a retracted and an extended end position, wherein the filter holder is preloaded towards its extended end position.

10. The filter housing cover (11) of claim 8 or 9, **characterized in that** the cap section (112) has a recess (113) with a radially inwardly facing surface (114), the filter holder (71) has a bearing pin (713) with a radially outwardly facing surface (714) being in sliding contact with the radially inwardly facing surface (114) of said cap section's recess (113), wherein the radially inwardly and radially outwardly facing surfaces (114, 714) each have at least one axially symmetric section, thereby forming the linear bearing.

11. The filter housing cover (11) of claim 10, **characterized in that** the radially inwardly facing surface (114) and the radially outwardly facing surface (714) are radially symmetric.

12. An oil filter system (1) comprising a filter housing (10) having a bottom portion (12) with a socket for receiving a conduit of a filter cartridge (50), **characterized in that** the housing comprises the housing cover (11) of one of claims 8 to 11 and/or **in that** the filter system (1) comprises the filter cartridge (50) of one of claims 4 to 7 and/or the filter holder (71) of one of claims 1 to 3.

## Patentansprüche

1. Ein Filterhalter (71) für eine Filterkartusche (50) nach einem der Ansprüche 4 bis 7 eines Fluidfiltersystems (1), wobei der Filterhalter (71) in eine Filtergehäuseabdeckung (11) integriert ist oder konfiguriert ist, um an einer Filtergehäuseabdeckung (11) angebracht zu werden, und wobei der Filterhalter mindestens aufweist:
a. eine Rückseite (712), die so konfiguriert ist, dass sie mit der Filterkartusche (50) zusammenpasst, und
b. eine Vorderseite (711), welche der Rückseite (712) gegenüberliegt und so konfiguriert ist, dass sie mit der Filtergehäuseabdeckung (11) des Filtersystems (1) zusammenpasst, wobei die Vorderseite (711) und die Rückseite (712) eine Längsachse (2) definieren,
c. mindestens eine sich von der Rückseite des Filterhalters erstreckende Zunge (25), wobei die Zunge (25) mindestens einen Vorsprung (251) aufweist, wobei der Vorsprung (251) radial nach außen weist und konfiguriert ist, um in einen Raum hinter einem Rand (514) der Filterkartusche einzugreifen, um dadurch den Filterhalter am Rand (514) zu befestigen,
d. mindestens eine der Rückseite (712) des Filterhalters (71) abgewandte Lagerfläche (716), wobei die Lagerfläche (716) in einem ersten radialen Abstand (*R₁*) von der Achse (2) beabstandet ist,
e. mindestens ein Anschlag (717), welcher an der Rückseite (712) in einem zweiten radialen Abstand (*R*₂) von der Achse (2) positioniert ist, wobei der zweite radiale Abstand (*R*₂) größer oder gleich dem ersten radialen Abstand (*R₁*) ist, d. h. *R₂*≥*R₁*,
**dadurch gekennzeichnet, dass**
die Lagerfläche (716) ein Kugelabschnitt ist, dessen Mittelpunkt auf der Achse (2) liegt und der so konfiguriert ist, dass er ein Schwenken des Filterhalters (71) relativ zur Filterkartusche (50) ermöglicht.

2. Der Filterhalter nach Anspruch 1, **dadurch gekennzeichnet, dass** die Lagerfläche (716) von der Achse (2) und der Rückseite (712) weg geneigt ist.

3. Der Filterhalter nach einem der vorhergehenden Ansprüche, **dadurch gekennzeichnet, dass**
die Lagerfläche (716) und der Anschlag (717) jeweils durch einen an der Vorderseite (711) angebrachten Ring oder durch einen einzelnen an der Vorderseite (711) befestigten Ring (718) gebildet werden.

4. Eine Filterkartusche (50) zum Filtern eines Fluids, wobei die Filterkartusche (50) so konfiguriert ist, dass sie lösbar an einem Filterhalter (71) nach einem der Ansprüche 1 bis 3 angebracht ist, zumindest aufweisend:
a. ein Filterelement (56), das einen Fluidkanal (561) mit einer Längsachse (2') bildet,
b. eine vordere Endkappe (51), mit einer Vorderseite (511) und einer Rückseite (512),
wobei
(i) die Rückseite (512) dichtend an der Vorderseite des Filterelements (56) angebracht ist,
(ii) die vordere Endkappe (51) dazu konfiguriert ist, lösbar an einer Abdeckung (11) eines Filtergehäuses (10) mittels des Filterhalters (71) angebracht zu werden,
(iii) die vordere Endkappe (51) eine Öffnung aufweist, die einen Rand (514) definiert,
(iv) die Filterkartusche einen Raum (515) hinter dem Rand (514) zum Aufnehmen mindestens eines Vorsprungs (251) einer Zunge (25) des Filterhalters (71) bereitstellt, wobei die Zunge (25) von der Vorderseite (511) der vordereren Endkappe (51) durch die Öffnung eingeführt wird, um den Filterhalter lösbar an dem Rand anzubringen,
(v) die Vorderseite (511) der vorderen Endkappe (51) eine Lagerfläche (516) hat, die den Rand (514) umgibt und einen ersten radialen Abstand (*r*₁) zwischen der Lagerfläche (516) und der Längsachse (2') definiert, wobei die Lagerfläche (516) konfiguriert ist, um mit einer entsprechenden Lagerfläche (716) des Filterhalters (71) zusammenzupassen, und
(vi) die Vorderfläche (511) der vorderen Endkappe (51) einen Anschlag (517) trägt, welcher auf der Vorderseite (511) der vorderen Endkappe in einem zweiten radialen Abstand (*r*₂) von der Längsachse (2') positioniert ist, wobei der zweite radiale Abstand (*r*₂) größer oder gleich dem ersten radialen Abstand (*r*₁) ist,
**dadurch gekennzeichnet, dass**
die Lagerfläche (516) der Vorderseite (511) der vorderen Endkappe (51) ein Kugelabschnitt mit seinem Mittepunkt auf der Längsachse (2') ist, um dadurch eine kugelförmige Lagerfläche bereitzustellen, um zu ermöglichen, dass die vordere Endkappe (51) relativ zum Filterhalter (71) geschwenkt wird, bis der Anschlag (717) der Rückseite des Filterhalters an seinem entsprechenden gegenüberliegenden Teil anschlägt, nämlich dem Anschlag (517) der Vorderseite (511) der vorderen Endkappe (51), ohne die Lagerfläche (516) der Filterkartusche (50) zu beschädigen, und dass die Lagerfläche (516) der Vorderseite (511) der vorderen Endkappe (51) und der Anschlag (517) der Vorderseite (511) der vorderen Endkappe (51) so konfiguriert sind, dass die vordere Endkappe (51) der Filterkartusche (50) vom Filterhalter (71) durch Schwenken der vorderen Endkappe (51) mit dem Anschlag (517) der Vorderseite (511) der vorderen Endkappe (51) relativ zum Filterhalter (71) freigegeben wird, wobei aufgrund des Schwenkens die Zunge vom Rand (514) zurückgezogen wird.

5. Die Filterkartusche (50) nach Anspruch 4, **dadurch gekennzeichnet, dass** der Rand (514) durch einen schräg aus der Vorderfläche (511) hervorstehenden Vorsprung gebildet wird, wodurch eine Aussparung (515) definiert wird, die den Raum zum Aufnehmen eines Vorsprungs (251) der Zunge bereitstellt.

6. Die Filterkartusche (50) nach einem der Ansprüche 4 bis 5, **dadurch gekennzeichnet, dass**
die Lagerfläche (516) hin zur Längsachse (2) geneigt ist.

7. Die Filterkartusche (50) nach einem der Ansprüche 4 bis 6, **dadurch gekennzeichnet, dass**
die Lagerfläche (516) und der Anschlag (517) jeweils durch einen an der Vorderfläche (511) angebrachten Ring (518) oder durch einen einzelnen an der Vorderfläche (511) angebrachten Ring (518) bereitgestellt sind.

8. Eine Filtergehäuseabdeckung (11), welche eine Längsachse (2) definiert, wobei die Filtergehäuseabdeckung (11) einen rohrförmigen Seitenwandabschnitt (111) mit einem offenen unteren Ende und einen das obere Ende des rohrförmigen Seitenwandabschnitts (111) verschließenden Kappenabschnitt (112) aufweist, **dadurch gekennzeichnet, dass** der Filterhalter (71) nach einem der Ansprüche 1 bis 3 am Kappenabschnitt (112) angebracht ist.

9. Die Filtergehäuseabdeckung (11) nach Anspruch 8, **dadurch gekennzeichnet, dass** der Kappenabschnitt (112) und der Filterhalter (71) eine lineare Auflage bilden, die eine Translation des Filterhalters relativ zum Kappenabschnitt (112) parallel zur Längsachse (2) zwischen einer eingefahrenen und einer ausgefahrenen Endposition ermöglicht, wobei der Filterhalter in Richtung seiner ausgefahrenen Endposition vorgespannt ist.

10. Die Filtergehäuseabdeckung (11) nach Anspruch 8 oder 9, **dadurch gekennzeichnet, dass**
der Kappenabschnitt (112) eine Aussparung (113) mit einer radial nach innen weisenden Fläche (114) aufweist, wobei der Filterhalter (71) einen Lagerzapfen (713) mit einer radial nach außen weisenden Fläche (714) in Gleitkontakt mit der radial nach innen weisenden Fläche (114) der Aussparung (113) des Kappenabschnitts aufweist, wobei die radial nach innen und radial nach außen weisenden Flächen (114, 714) jeweils mindestens einen achssymmetrischen Abschnitt haben, wodurch die lineare Auflage gebildet wird.

11. Die Filtergehäuseabdeckung (11) nach Anspruch 10, **dadurch gekennzeichnet, dass**
die radial nach innen weisende Fläche (114) und die radial nach außen weisende Fläche (714) radial symmetrisch sind.

12. Eine Ölfilteranlage (1) aufweisend ein Filtergehäuse (10) mit einem unteren Abschnitt (12) mit einem Sockel zur Aufnahme einer Leitung einer Filterkartusche (50), **dadurch gekennzeichnet, dass** das Gehäuse die Gehäuseabdeckung (11) nach einem der Ansprüche 8 bis 11 aufweist und/oder dass das Filtersystem (1) die Filterkartusche (50) nach einem der Ansprüche 4 bis 7 und/oder den Filterhalter (71) nach einem der Ansprüche 1 bis 3 aufweist.

## Revendications

1. Porte-filtre (71) pour une cartouche de filtre (50) de l'une des revendications 4 à 7 d'un système de filtre à fluide (1), le porte-filtre (71) étant intégré à un couvercle de boîtier de filtre (11) ou configuré pour être attaché à un couvercle de boîtier de filtre (11) ou le porte-filtre (71) comprends au moins :
a. un côté arrière (712) configuré pour s'accoupler à la cartouche de filtre (50), et
b. un côté avant (711) opposé au côté arrière (712) et configuré pour s'accoupler au couvercle de boîtier de filtre (11) du système de filtre à fluide (1), dans lequel le côté avant (711) et le côté arrière (712) définissent un axe longitudinal (2),
c. au moins une languette (25) s'étendant depuis le côté arrière du porte-filtre, dans lequel la languette (25) comporte au moins une saillie (251), ladite saillie (251) étant orientée radialement vers l'extérieur et étant configurée pour s'engager dans un espace derrière le rebord (514) de la cartouche de filtre pour fixer ainsi le porte-filtre au rebord (514),
d. au moins une surface de palier (716) orientée à l'opposé du côté arrière (712) du porte-filtre (71), dans lequel la surface de palier (716) est espacée à une première distance radiale (*R*₁) de l'axe (2),
e. au moins une butée (717) positionnée sur le côté arrière (712) à une seconde distance radiale (*R*₂) dudit axe (2), dans lequel la seconde distance radiale (*R*₂) est supérieure où égale à la première distance radiale (*R*₁), c'est-à-dire *R*₂ ≥ *R*₁,
**caractérisé en ce que**
la surface de palier (716) est une section d'une sphère ayant son centre sur l'axe (2) et configurée pour permettre de faire pivoter le porte-filtre (71) par rapport à la cartouche de filtre (50).

2. Porte-filtre selon la revendication 1, **caractérisé en ce que**
la surface de palier (716) est inclinée pour être orientée à l'opposé de l'axe (2) et du côté arrière (712).

3. Porte-filtre (71) selon l'une des revendications précédentes, **caractérisé en ce que**
la surface de palier (716) et la butée (717) sont chacune fournies par une bague attachée à la côté avant (711) ou sont fournies par une seule bague (718) attachée à la côté avant (711).

4. Cartouche de filtre (50) pour filtrer un fluide, la cartouche de filtre (50) étant configurée pour être attachée de façon amovible à un porte-filtre (71) de l'une des revendications 1 à 3 d'un système de filtre, comprenant au moins :
a. un élément de filtre (56) formant un canal de fluide (561) avec un axe longitudinal (2'),
b. un capuchon d'extrémité avant (51), avec un côté avant (511) et un côté arrière (512),
dans laquelle
(i) le côté arrière (512) est attaché de façon étanche au côté avant de l'élément de filtre (56),
(ii) le capuchon d'extrémité avant (51) est configuré pour être attaché de façon libérable à un couvercle (11) d'un boîtier de filtre (10) via ledit porte-filtre (71),
(iii) le capuchon d'extrémité avant (51) comporte une ouverture définissant un rebord (514),
(iv) la cartouche de filtre fournit un espace (515) derrière le rebord (514) pour recevoir au moins une saillie (251) d'une languette (25) du porte-filtre (71), la languette (25) étant insérée depuis le côté avant (511) du capuchon d'extrémité avant (51) à travers l'ouverture pour fixer de façon amovible le porte-filtre audit rebord,
(v) le côté avant (511) du capuchon d'extrémité avant (51) comporte une surface de palier (516) entourant le rebord (514) et définissant une première distance radiale (*r*₁) entre la surface de palier (516) et l'axe longitudinal (2'), dans laquelle la surface de palier (516) est configurée pour s'accoupler à la surface de palier (716) correspondante du porte-filtre (71) et
(vi) le côté avant (511) du capuchon d'extrémité avant (51) supporte une butée (517) positionnée sur le côté avant (511) du capuchon d'extrémité avant à une seconde distance radiale (*r*₂) dudit axe longitudinal (2'), dans laquelle ladite seconde distance radiale (*r*₂) est supérieure ou égale à ladite première distance radiale (*r*₁)
**caractérisée en ce que**
la surface de palier (516) dudit côté avant (511) du capuchon d'extrémité avant (51) est une section d'une sphère ayant son centre sur l'axe longitudinal (2'), pour fournir ainsi une surface de palier sphérique permettant de faire pivoter le capuchon d'extrémité avant (51) par rapport au porte-filtre (71) jusqu'à ce que la butée (717) du côté arrière du porte-filtre bute contre sa partie opposée respective, à savoir la butée (517) sur le côté avant (511) du capuchon d'extrémité avant (51), sans endommager la surface de palier (516) de la cartouche de filtre (50) et **en ce que** la surface de palier (516) sur le côté avant (511) du capuchon d'extrémité avant (51) et la butée (517) sur le côté avant (511) du capuchon d'extrémité avant (51) sont configurées pour libérer le capuchon d'extrémité avant (51) de la cartouche de filtre (50) vis-à-vis du porte-filtre (71) en faisant pivoter le capuchon d'extrémité avant (51) avec la butée (517) sur le côté avant (511) du capuchon d'extrémité avant (51) par rapport au porte-filtre (71), dans laquelle en raison dudit pivotement la languette est rétractée du rebord (514).

5. Cartouche de filtre (50) selon la revendication 4, **caractérisée en ce que**
le rebord (514) est fourni par une saillie en saillie à l'oblique hors de la surface avant (511), définissant ainsi un évidement (515) fournissant ledit espace pour recevoir une saillie (251) de la languette.

6. Cartouche de filtre (50) selon l'une des revendications 4 et 5, **caractérisée en ce que**
la surface de palier (516) est inclinée vers l'axe longitudinal (2).

7. Cartouche de filtre (50) selon l'une des revendications 4 à 6, **caractérisée en ce que**
la surface de palier (516) et la butée (517) sont chacune fournies par une bague (518) attachée à la surface avant (511) ou sont fournies par une seule bague (518) attachée à la surface avant (511).

8. Couvercle de boîtier de filtre (11) définissant un axe longitudinal (2), le couvercle de boîtier de filtre (11) comportant une section de paroi latérale tubulaire (111) avec une extrémité basse ouverte et une section de capuchon (112) fermant l'extrémité supérieure de la section de paroi latérale tubulaire (111), **caractérisé en ce que** le porte-filtre (71) de l'une des revendications 1 à 3 est attaché à la section de capuchon (112).

9. Couvercle de boîtier de filtre (11) selon la revendication 8, **caractérisé en ce que**
la section de capuchon (112) et le porte-filtre (71) forment un palier linéaire permettant une translation du porte-filtre par rapport à la section de capuchon (112) parallèle à l'axe longitudinal (2) entre des positions d'extrémité rétractée et étendue, dans lequel le porte-filtre est précontraint vers sa position d'extrémité étendue.

10. Couvercle de boîtier de filtre (11) selon la revendication 8 ou 9, **caractérisé en ce que**
la section de capuchon (112) comporte un évidement (113) avec une surface orientée radialement vers l'intérieur (114), le porte-filtre (71) comporte une broche de palier (713) avec une surface orientée radialement vers l'extérieur (714) en contact coulissant avec la surface orientée radialement vers l'intérieur (114) de l'évidement (113) de ladite section de capuchon, dans lequel les surfaces orientées radialement vers l'intérieur et radialement vers l'extérieur (114, 714) comportent chacune au moins une section axialement symétrique, formant ainsi le palier linéaire.

11. Couvercle de boîtier de filtre (11) selon la revendication 10, **caractérisé en ce que**
la surface orientée radialement vers l'intérieur (114) et la surface orientée radialement vers l'extérieur (714) sont radialement symétriques.

12. Système de filtre à huile (1) comprenant un boîtier de filtre (10) comportant une portion basse (12) avec un embout femelle pour recevoir un conduit d'une cartouche de filtre (50), **caractérisé en ce que** le boîtier comprend le couvercle de boîtier (11) de l'une des revendications 8 à 11 et/ou **en ce que** le système de filtre (1) comprend la cartouche de filtre (50) de l'une des revendications 4 à 7 et/ou le porte-filtre (71) de l'une des revendications 1 à 3.
